# EUROPEAN PATENT APPLICATION

(11) **EP 4 276 716 A1**
(43) Date of publication of application: **15.11.2023**
(21) Application number: 22752107.7
(22) Date of filing: 21.01.2022
(51) Int. Cl.: G06Q 10/06, G06Q 10/08

(54) **WORKTABLE ENABLE/DISABLE RECOMMENDATION METHOD AND APPARATUS, ELECTRONIC DEVICE, AND WAREHOUSING SYSTEM**

(30) Priority: 09.02.2021 CN 202110178242
(71) Applicant: Shenzen Kubo Software Co., Ltd, Shenzhen, Guangdong 518100 (CN)
(72) Inventor: YU, Runfang, Shenzhen, Guangdong 518100 (CN)
(74) Representative: Nederlandsch Octrooibureau
(86) International application number: PCT/CN2022/073308
(87) International publication number: WO 2022/170945

(57) **Abstract**

Embodiments of the present disclosure provide a recommendation method and apparatus for recommending to enable/disable a workstation, an electronic device, and a warehousing system. to-be-processed order information is acquired for the warehousing system. The to-be-processed order information is used for representing to-be-processed orders in the system and a deadline corresponding to each of the to-be-processed orders, and each of the to-be-processed orders corresponds to at least one warehousing box. A target workstation number is generated according to the to-be-processed order information. The target workstation number is used for representing a number of workstations required for completing the corresponding to-be-processed order before the deadline. Information of enabling/disabling a workstation is determined according to the target workstation number, and the information of enabling/disabling the workstation is transmitted to a terminal device. Since workstations of the target workstation number are caused to work, the to-be-processed order can be processed before the deadline. The information of enabling/disabling the workstation generated according to the target workstation number can improve the accuracy of a moment of enabling/disabling the workstation. In this way, the overall working efficiency of the warehousing system is improved.

## Description

### CROSS-REFERENCE TO RELATED APPLICATIONS

The present disclosure claims priority to Chinese Patent Application No. 202110178242.X, filed with the China National Intellectual Property Administration on February 09, 2021 and entitled "METHOD AND APPARATUS FOR RECOMMENDING TO ENABLE/DISABLE A WORKSTATION, ELECTRONIC DEVICE, AND WAREHOUSING SYSTEM", which is incorporated herein by reference in its entirety.

### TECHNICAL FIELD

The present disclosure relates to the field of intelligent storage technologies, and in particular, to a method and apparatus for recommending to enable/disable a workstation, an electronic device, and a warehousing system.

### BACKGROUND

An intelligent warehousing system based on a warehousing robot adopts an intelligent operating system. The warehousing robot is controlled through a system command to take out a warehousing box corresponding to commodity to a workstation, and then a human or a robot picks up and sorts the commodity on the workstation, thereby completing packaging and delivery of commodities in an order.

In an existing technology, a number of workstations may be adjusted through enabling/disabling a workstation according to a specific demand. In case of a large number of orders, the operator may enable the workstation to improve an order processing capacity. Otherwise, the operator may disable the workstation, to save workstation resources. However, in an actual operating process, the operator determines a moment of enabling/disabling the workstation based on the experience. Therefore, the accuracy is low, and the workstation processing capacity of is insufficient or a resource waste is caused, which affects the overall efficiency of the warehousing system.

### SUMMARY

The present disclosure provides a method and apparatus for recommending to enable/disable a workstation, an electronic device, and a warehousing system. A target workstation number is generated according to to-be-processed order information, and enabling/disabling a workstation information is determined according to the target workstation number, and is transmitted to a terminal device, to prompt an operator to enable/disable a workstation, so that a moment of enabling/disabling the workstation is more proper. In this way, the overall working efficiency of the warehousing system is improved.

According to a first aspect, an embodiment of the present disclosure provides a method for recommending to enable/disable a workstation. The method includes:
acquiring to-be-processed order information, where the to-be-processed order information is used for representing to-be-processed orders in a system and a deadline corresponding to each of the to-be-processed orders, and each of the to-be-processed orders corresponds to at least one warehousing box; determining a target workstation number according to the to-be-processed order information, where the target workstation number is used for representing a number of workstations required for completing the corresponding to-be-processed order before the deadline; and generating information of enabling/disabling a workstation according to the target workstation number, and transmitting the information of enabling/disabling the workstation to a terminal device.

Optionally, the determining a target workstation number according to the to-be-processed order information includes: determining a necessary warehousing box number according to the to-be-processed order information, where the necessary warehousing box number is used for representing a number of warehousing boxes that need to be processed within a first preset duration; and determining the target workstation number according to the necessary warehousing box number and workstation processing capacity information, where the workstation processing capacity information is used for representing a number of warehousing boxes processed by a single workstation in a unit time.

Optionally, the method further includes: acquiring identification information of the workstation; acquiring a historical work record of the workstation according to the identification information of the workstation; and determining the workstation processing capacity information according to the historical work record.

Optionally, the to-be-processed order information includes at least two to-be-processed orders and deadlines corresponding to the to-be-processed orders, each of the to-be-processed orders includes at least one warehousing box identifier, the necessary warehousing box number includes a first necessary number and a second necessary number, the first necessary number is used for representing the number of warehousing boxes that need to be processed within the first preset duration, the second necessary number is used for representing a number of warehousing boxes that need to be processed within a second preset duration, and the determining a necessary warehousing box number according to the to-be-processed order information includes: determining a first target order and a second target order according to the deadline of each of the to-be-processed orders, where the first target order represents a to-be-processed order, where a duration from a deadline of the to-be-processed order to a current time is less than or equal to the first preset duration, the second target order represents a to-be-processed order, where a duration from a deadline of the to-be-processed order to the current time is less than or equal to the second preset duration, and the second preset duration is greater than the first preset duration; and determining the first necessary number according to a number of warehousing box identifiers in the first target order, and determining the second necessary number according to a number of warehousing box identifiers in the second target order; and the determining the target workstation number according to the necessary warehousing box number and workstation processing capacity information includes: determining a first workstation number according to the first necessary number and the workstation processing capacity information; determining a second workstation number according to the second necessary number and the workstation processing capacity information; and determining the first workstation number as the target workstation number if the first workstation number is greater than or equal to the second workstation number, and determining the second workstation number as the target workstation number if the first workstation number is less than the second workstation number

Optionally, the to-be-processed order information includes at least one to-be-processed order and a deadline corresponding to the to-be-processed order, each to-be-processed order includes at least one warehousing box identifier, and the determining a necessary warehousing box number according to the to-be-processed order information includes: determining a latest deadline according to the deadline of each to-be-processed order, where the latest deadline represents a deadline closest to the current time, and a duration between the latest deadline and the current time is the first preset duration; determining a target order according to the latest deadline, where the target order represents a to-be-processed order corresponding to the latest deadline; and determining the necessary warehousing box number according to a number of warehousing box identifiers in the target order.

Optionally, the workstation processing capacity information includes workstation category information, where the workstation category information is used for representing a category of a warehousing box processed by the workstation, and the method further includes: determining warehousing box category information according to the to-be-processed order information, where the warehousing box category information is used for representing a category of a warehousing box corresponding to each to-be-processed order; the determining the target workstation number according to the necessary warehousing box number and workstation processing capacity information includes: allocating warehousing boxes of the necessary warehousing box number according to the warehousing box category information and the workstation category information, and determining a number of warehousing boxes to be processed by each workstation; and determining a target workstation number of a type of workstations corresponding to the workstation category information according to the number of warehousing boxes to be processed by each workstation and the workstation processing capacity information corresponding to each workstation; and the generating information of enabling/disabling the workstation according to the target workstation number includes: generating the information of enabling/disabling the workstation according to the target workstation number of a type of workstations corresponding to the workstation category information, where the information of enabling/disabling the workstation indicates that a user enables or disables the workstations corresponding to the workstation category information.

Optionally, the terminal device is a workstation, the information of enabling/disabling the workstation includes information of enabling a workstation and information of disabling a workstation, and the information of enabling/disabling the workstation according to the target workstation number includes: generating the information of enabling the workstation if the target workstation number is greater than a current workstation number, wherein the information of enabling the workstation indicates that the user enables the workstations; and generating the information of disabling the workstation if the target workstation number is less than the current workstation number, wherein the information of disabling the workstation indicates that the user disables the workstations; and the transmitting the information of enabling/disabling a workstation to a terminal device includes: transmitting the information of enabling the workstation or the information of disabling the workstation to the workstations for display..

According to a second aspect, an embodiment of the present disclosure further provides an apparatus for recommending to enable/disable a workstation. The apparatus includes:
an acquisition module, configured to acquire to-be-processed order information, where the to-be-processed order information is used for representing to-be-processed orders in a system and a deadline corresponding to each of the to-be-processed orders, and each of the to-be-processed orders corresponds to at least one warehousing box;
a determination module, configured to determine a target workstation number according to the to-be-processed order information, where the target workstation number is used for representing a number of workstations required for completing the corresponding to-be-processed order before the deadline; and
a transmission module, configured to generate information of enabling/disabling a workstation according to the target workstation number, and transmit the information of enabling/disabling the workstation to a terminal device.

Optionally, the determination module is specifically configured to: determine a necessary warehousing box number according to the to-be-processed order information, where the necessary warehousing box number is used for representing a number of warehousing boxes that need to be processed within a first preset duration; and determine the target workstation number according to the necessary warehousing box number and workstation processing capacity information, where the workstation processing capacity information is used for representing a number of warehousing boxes processed by a single workstation in a unit time.

Optionally, the acquisition module is further configured to: acquire identification information of the workstation; acquire a historical work record of the workstation according to the identification information of the workstation; and determine the workstation processing capacity information according to the historical work record.

Optionally, the to-be-processed order information includes at least two to-be-processed orders and deadlines corresponding to the to-be-processed orders, each of the to-be-processed orders includes at least one warehousing box identifier, the necessary warehousing box number includes a first necessary number and a second necessary number, the first necessary number is used for representing the number of warehousing boxes that need to be processed within the first preset duration, the second necessary number is used for representing a number of warehousing boxes that need to be processed within a second preset duration, and during the determination of the necessary warehousing box number according to the to-be-processed order information, the determination module is specifically configured to: determine a first target order and a second target order according to the deadline of each of the to-be-processed orders, where the first target order represents a to-be-processed order, where a duration from a deadline of the to-be-processed order to a current time is less than or equal to the first preset duration, the second target order represents a to-be-processed order, where a duration from a deadline of the to-be-processed order to the current time is less than or equal to the second preset duration from the current time, and the second preset duration is greater than the first preset duration; and determine the first necessary number according to a number of warehousing box identifiers in the first target order, and determine the second necessary number according to a number of warehousing box identifiers in the second target order; and during the determination of the target workstation number according to the necessary warehousing box number and workstation processing capacity information, the determination module is specifically configured to: determine a first workstation number according to the first necessary number and the workstation processing capacity information; determine a second workstation number according to the second necessary number and the workstation processing capacity information; and determine the first workstation number as the target workstation number if the first workstation number is greater than or equal to the second workstation number, and determining the second workstation number as the target workstation number if the first workstation number is less than the second workstation number

Optionally, the to-be-processed order information includes at least one to-be-processed order and a deadline corresponding to the to-be-processed order, each to-be-processed order includes at least one warehousing box identifier, and during the determination of the necessary warehousing box number according to the to-be-processed order information, the determination module is specifically configured to: determine a latest deadline according to the deadline of each to-be-processed order, where the latest deadline represents a deadline closest to the current time, and a duration between the latest deadline and the current time is the first preset duration; determine a target order according to the latest deadline, where the target order represents a to-be-processed order corresponding to the latest deadline; and determine the necessary warehousing box number according to a number of warehousing box identifiers in the target order.

Optionally, the workstation processing capacity information includes workstation category information, where the workstation category information is used for representing a category of a warehousing box processed by the workstation, and the determination module is further configured to: determine warehousing box category information according to the to-be-processed order information, where the warehousing box category information is used for representing a category of a warehousing box corresponding to each to-be-processed order; during the determination of the target workstation number according to the necessary warehousing box number and workstation processing capacity information, the determination module is specifically configured to: allocate warehousing boxes of the necessary warehousing box number according to the warehousing box category information and the workstation category information, and determine a number of warehousing boxes to be processed by each workstation; and determine a target workstation number of a type of workstations corresponding to the workstation category information according to the number of warehousing boxes to be processed by each workstation and the workstation processing capacity information corresponding to each workstation; and during the generation of the information of enabling/disabling a workstation according to the target workstation number, the transmission module is specifically configured to generate the information of enabling/disabling the workstation according to the target workstation number of a type of workstations corresponding to the workstation category information, where the information of enabling/disabling the workstation indicates that a user enables or disables the workstations corresponding to the workstation category information.

Optionally, the terminal device is a workstation, the information of enabling/disabling the workstation includes information of enabling a workstation and information of disabling a workstation, and during the generation the information of enabling/disabling the workstation according to the target workstation number, the transmission module is specifically configured to: generate the information of enabling the workstation if the target workstation number is greater than a current workstation number, where the information of enabling the workstation indicates that the user enables the workstations; and generate the information of disabling the workstation if the target workstation number is less than the current workstation number, where the information of disabling the workstation indicates that the user disables the workstations; and during the transmission of the information of enabling/disabling a workstation to the terminal device, the transmission module is specifically configured to transmit the information of enabling the workstation or the information of disabling the workstation to the workstations for display.

According to a third aspect, an embodiment of the present disclosure provides an electronic device, including a memory and at least one processor. The memory is configured to store computer-executable instructions. The at least one processor executes the computer-executable instructions stored in the memory, so that the at least one processor performs the method for recommending to enable/disable a workstation provided in any embodiment corresponding to the first aspect of the present disclosure.

According to a fourth aspect, an embodiment of the present disclosure provides a warehousing system, including: a workstation and the electronic device provided in the embodiment corresponding to the third aspect of the present disclosure. The workstation is communicatively connected to the electronic device.

According to a fifth aspect, an embodiment of the present disclosure further provides a computer-readable storage medium. The computer-readable storage medium stores computer-executable instructions. When a processor executes the computer-executable instructions, the method for recommending to enable/disable a workstation provided in any embodiment corresponding to the first aspect of the present disclosure is implemented.

According to a sixth aspect, an embodiment of the present disclosure provides a computer program product, including a computer program. When the computer program is executed by a processor, the method for recommending to enable/disable a workstation in the above first aspect and various possible designs of the first aspect is implemented.

According to the method and apparatus for recommending to enable/disable a workstation, the electronic device, and the warehousing system provided in the embodiments of the present disclosure, the to-be-processed order information is acquired, where the to-be-processed order information is used for representing the to-be-processed orders in the system and the deadline corresponding to each of the to-be-processed orders, and each of the to-be-processed orders corresponds to at least one warehousing box; the target workstation number is determined according to the to-be-processed order information, where the target workstation number is used for representing the number of workstations required for completing the corresponding to-be-processed order before the deadline; and the information of enabling/disabling a workstation is determined according to the target workstation number, and the information of enabling/disabling the workstation is transmitted to the terminal device. Since the to-be-processed order information is determined according to the to-be-processed orders, workstations of the target workstation number are enabled, so that the to-be-processed orders can be processed before the deadlines. The information of enabling/disabling the workstation generated according to the target workstation number may be used as recommendation information for a user to enabling/disabling the workstations, which improves the accuracy of a moment of enabling/disabling the workstations by the user. In this way, the overall working efficiency of the warehousing system is improved.

### BRIEF DESCRIPTION OF THE DRAWINGS

The drawings herein, which are incorporated into the specification and constitute a part of the specification, illustrate embodiments that conform to the present disclosure and are used together with the specification to explain the principles of the present disclosure.
FIG. 1 is a diagram of an application scenario of a method for recommending to enable/disable a workstation according to an embodiment of the present disclosure.
FIG. 2 is a flowchart of a method for recommending to enable/disable a workstation according to an embodiment of the present disclosure.
FIG. 3 is a flowchart of a method for recommending to enable/disable a workstation according to another embodiment of the present disclosure.
FIG. 4 is a flowchart of a possible implementation of step S202 in the embodiment shown in FIG. 3.
FIG. 5 is a flowchart of another possible implementation of step S202 in the embodiment shown in FIG. 3.
FIG. 6 is a flowchart of a possible implementation of step S203 in the embodiment shown in FIG. 3.
FIG. 7 is a schematic diagram of determining a target workstation number according to an embodiment of the present disclosure.
FIG. 8 is a schematic structural diagram of an apparatus for recommending to enable/disable a workstation according to an embodiment of the present disclosure.
FIG. 9 is a schematic diagram of an electronic device according to some embodiments of the present disclosure.
FIG. 10 is a schematic structural diagram of a warehousing system according to an embodiment of the present disclosure.

Specific embodiments of the present disclosure are shown by the above drawings, and more detailed description will be given below. These drawings and text description are not for limiting the scope of the concept of the present disclosure in any way, but for illustrating the concept of the present disclosure for those skilled in the art by referring to specific embodiments.

### DETAILED DESCRIPTION

Exemplary embodiments are described in detail herein, and examples of the exemplary embodiments are shown in the drawings. When the following description involves the drawings, unless otherwise indicated, the same numerals in different drawings represent the same or similar elements. The implementations described in the following exemplary embodiments do not represent all implementations consistent with the present disclosure. On the contrary, they are merely examples of apparatuses and methods consistent with some aspects of the present disclosure as detailed in the appended claims.

The technical solutions of the present disclosure and how the technical solutions of the present disclosure resolve the above technical problems are described in detail below through the specific embodiments. The following specific embodiments may be combined with each other, and the same or similar concepts or processes may not be repeated in some embodiments. The embodiments of the present disclosure are described below with reference to the drawings.

The application scenarios of the embodiments of the present disclosure are described below.

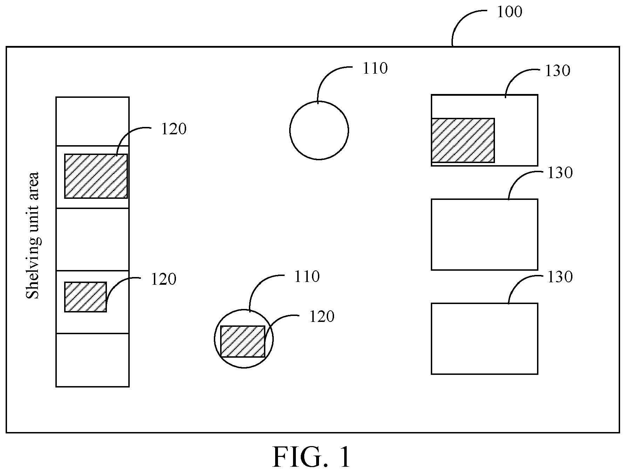

FIG. 1 is a diagram of an application scenario of a method for recommending to enable/disable a workstation according to an embodiment of the present disclosure. As shown in FIG. 1, in an intelligent warehousing system 100, a warehousing robot 110 is controlled to carry a warehousing box 120 located in a shelf area and transport the warehousing box 120 to a workstation 130, and an operator or a robot at the workstation 130 performs subsequent processing, such as taking out, sorting, and packaging a commodity in the warehousing box 120. In an existing technology, a number of workstations 130 may be adjusted through enabling/disabling the workstation according to a specific demand. In case of a large number of orders, the operator may enable the workstation 130 to improve an order processing capacity. Otherwise, the operator may disable the workstation 130, to save workstation resources. However, in an actual operating process, the warehousing system 100 cannot automatically determine a current optimal workstation number, and the operator determines a moment of enabling/disabling the workstation 130 based on the experience. Therefore, the accuracy is low, and the workstation processing capacity is insufficient or a resource waste is caused, which affects the overall efficiency of the warehousing system 100.

In order to resolve the problem, in the method for recommending to enable/disable a workstation provided in this embodiment of the present disclosure, a target workstation number is automatically generated according to to-be-processed order information, and information of enabling/disabling a workstation is determined according to the target workstation number, and is transmitted to a terminal device, to prompt an operator to enable/disable a workstation, so that a moment of enabling/disabling the workstation is more proper. In this way, the overall working efficiency of the warehousing system is improved.

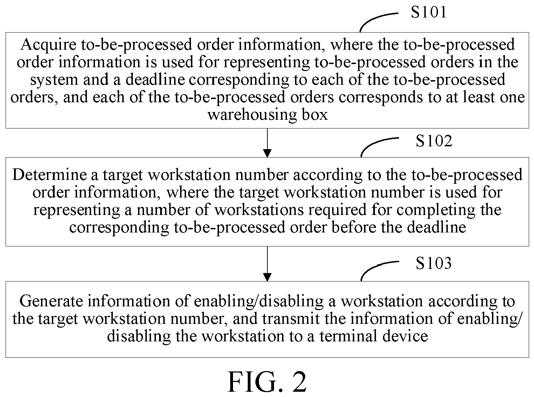

FIG. 2 is a flowchart of a method for recommending to enable/disable a workstation according to an embodiment of the present disclosure. Exemplarily, the method for recommending to enable/disable a workstation is applicable to an intelligent warehousing system. As shown in FIG. 2, the method for recommending to enable/disable a workstation provided in this embodiment of the present disclosure includes the following steps:
S101: Acquire to-be-processed order information, where the to-be-processed order information is used for representing to-be-processed orders in the system and a deadline corresponding to each of the to-be-processed orders, and each of the to-be-processed orders corresponds to at least one warehousing box.

Exemplarily, the to-be-processed order information is data about the to-be-processed orders in the system. When the intelligent warehousing system receives new order information transmitted by an upstream device, the to-be-processed order information is updated correspondingly, and a number of to-be-processed orders in the system increases correspondingly. Further, the to-be-processed order information further includes the deadline corresponding to each of the to-be-processed orders. The system processes the orders according to the deadlines, to ensure that the to-be-processed orders are processed before the deadlines. Each of the to-be-processed orders includes at least one specific commodity, that is, an SKU. Each SKU corresponds to one or more warehousing boxes for placing commodities. Therefore, each of the to-be-processed orders corresponds to at least one warehousing box.

S102: Determine a target workstation number according to the to-be-processed order information, where the target workstation number is used for representing a number of workstations required for completing the corresponding to-be-processed order before the deadline.

Exemplarily, the to-be-processed order information includes identification information of the to-be-processed orders and identification information of the specific commodity included in each of the to-be-processed orders. For example, the to-be-processed order information includes a to-be-processed order 001 and a to-be-processed order 002. The to-be-processed order 001 includes one commodity A1 and two commodities B4. The to-be-processed order 002 includes one commodity A2 and two commodities C1. The identification information of the commodities included in each order may be determined according to the relevant information in the to-be-processed order information. Then warehousing boxes corresponding to the commodities in each of the to-be-processed orders may be determined according to preset warehousing box configuration information and the identification information of the commodities.

Further, a processing capacity of a workstation is evaluated by counting a number of warehousing boxes that are processed. Since a different to-be-processed order corresponds to a different deadline, in order to process all of the to-be-processed orders in the to-be-processed order information before the deadlines, a total workstation processing capacity allowing the warehousing boxes corresponding to all of the orders to be processed before the deadlines of all of the orders needs to be ensured. A minimum workstation number allowing the warehousing boxes corresponding to all of the orders to be processed before the deadlines of all of the orders is a target workstation number.

Exemplarily, a target workstation may be determined in a plurality of manners. For example, a number of warehousing boxes that need to be processed within a preset time, that is, a necessary warehousing box number is determined, to ensure that the orders in the to-be-processed order information can be processed before the deadlines. Then a number of workstations required for processing warehousing boxes of the necessary warehousing box number, that is, the target workstation number is determined according to a processing capacity of a single workstation. For another example, an average workstation number at a current time is acquired based on historical operation information recorded in the warehousing system, and the average workstation number is determined as the target workstation number. Specific settings may be made as required herein.

S103: Generate information of enabling/disabling a workstation according to the target workstation number, and transmit the information of enabling/disabling the workstation to a terminal device.

Exemplarily, the target workstation number is a workstation number allowing all of the to-be-processed orders in the to-be-processed order information before the deadlines, which may be considered as an optimal workstation number. The warehousing system may obtain the information of enabling/disabling the workstation by comparing the target workstation number with a number of workstations currently in operation.

More specifically, for example, the information of enabling the workstation is generated if the target workstation number is greater than a current workstation number. The information of enabling the workstation indicates that a user should enable the workstation. The information of disabling the workstation is generated if the target workstation number is less than the current workstation number. The information of disabling the workstation indicates that the user should disable the workstation. The user is prompted to adjust the current workstation number, so that the current workstation number is consistent with the target workstation number, that is, the optimal workstation number, thereby avoiding a waste caused by idle workstations, and avoiding expiration of orders caused by an insufficient total workstation processing capacity. In this way, the overall working efficiency of the warehousing system is improved.

Further, optionally, the transmitting the information of enabling/disabling the workstation to a terminal device includes: transmitting, by the warehousing system, the information of enabling the workstation or the information of disabling the workstation to the workstations, and presenting the information to an operator through a presenting unit of each of the workstations, so as to notify the operator to enable/disable the workstations. The presenting unit may include a display unit and or a sound unit. The presenting unit may notify the operator of the information by displaying the information and or playing a sound.

Further, optionally, before all of the workstations are enabled, the information of enabling/disabling the workstation may be determined. Then workstations of a corresponding target workstation number may be enabled in advance (which means that workstation staff have not arrived at the workstations) according to the information of enabling the workstation through system setting. After the workstations are enabled in advance, the system may deliver the order information to the workstations that are enabled in advance, and deliver a material box carrying task to a robot according to the orders that are delivered, to carry material boxes required for the orders corresponding to the workstations to the workstations. In this way, when the workstation staff arrive at the workstations, the workstation staff may directly work without a need to wait for a material box carrying time, which improves the efficiency.

In this embodiment provided in the present disclosure, the to-be-processed order information is acquired, where the to-be-processed order information is used for representing the to-be-processed orders in the system and the deadline corresponding to each of the to-be-processed orders, and each of the to-be-processed orders corresponds to at least one warehousing box; The target workstation number is generated according to the to-be-processed order information, where the target workstation number is used for representing the number of workstations required for completing the corresponding to-be-processed order before the deadline; and the information of enabling/disabling the workstation is determined according to the target workstation number, and the information of enabling/disabling the workstation is transmitted to the terminal device. Since the to-be-processed order information is determined according to the to-be-processed orders, workstations of the target workstation number are caused to work, so that the to-be-processed orders can be processed before the deadlines. The information of enabling/disabling the workstation generated according to the target workstation number may be used as recommendation information for a user to enable/disable the workstations, which improves the accuracy of a moment of enabling/disabling the workstations by the user. In this way, the overall working efficiency of the warehousing system is improved.

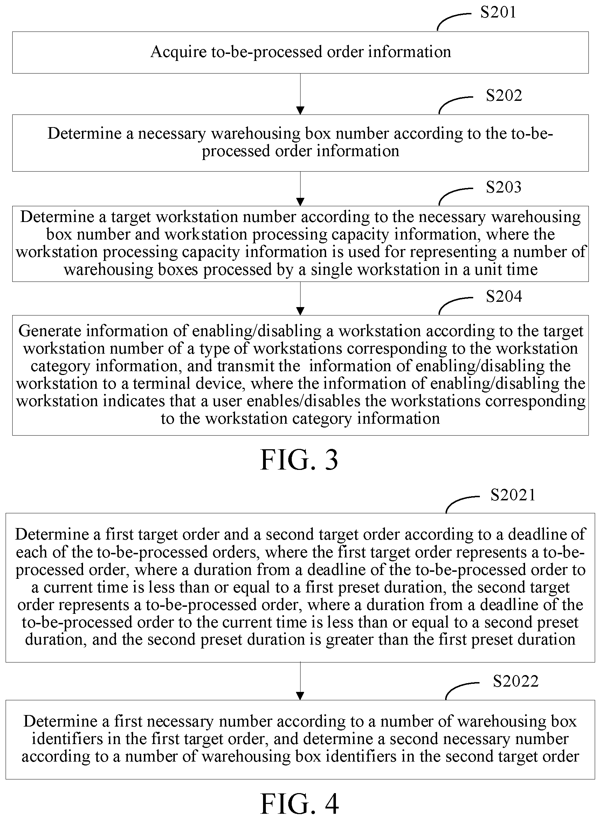

FIG. 3 is a flowchart of a method for recommending to enable/disable a workstation according to another embodiment of the present disclosure. In the method for recommending to enable/disable a workstation provided in this embodiment of the present disclosure, step S102 is further detailed based on the embodiment shown in FIG. 2. As shown in FIG. 3, the method for recommending to enable/disable a workstation provided in this embodiment includes the following steps:
S201: Acquire to-be-processed order information.
S202: Determine a necessary warehousing box number according to the to-be-processed order information.

As shown in the embodiment shown in FIG. 2, the plurality of orders in the to-be-processed order information and the corresponding deadlines may be determined according to the to-be-processed order information, and then the number of warehousing boxes that need to be processed within the preset time, that is, the necessary warehousing box number may be acquired. If warehousing boxes of the necessary warehousing box number can be processed within the preset time, it can be ensured that all of the to-be-processed orders corresponding to the to-be-processed order information do not expire.

In a possible implementation, the to-be-processed order information includes at least two to-be-processed orders and deadlines corresponding to the to-be-processed orders, and each of the to-be-processed orders includes at least one warehousing box identifier. The warehousing box identifier is used for distinguishing between and locating the warehousing boxes. The necessary warehousing box number includes a first necessary number and a second necessary number, the first necessary number is used for representing the number of warehousing boxes that need to be processed within a first preset duration, and the second necessary number is used for representing a number of warehousing boxes that need to be processed within a second preset duration.

As shown in FIG. 4, a specific implementation of step S202 may include the following steps:
S2021: Determine a first target order and a second target order according to a deadline of each of the to-be-processed orders, where the first target order represents a to-be-processed order, where a duration from a deadline of the to-be-processed order to a current time is less than or equal to the first preset duration, the second target order represents a to-be-processed order, where a duration from a deadline of the to-be-processed order to the current time is less than or equal to the second preset duration, and the second preset duration is greater than the first preset duration.
S2022: Determine a first necessary number according to a number of warehousing box identifiers in the first target order, and determine a second necessary number according to a number of warehousing box identifiers in the second target order.

Exemplarily, the deadline of the to-be-processed order may be a specific time point. For example, at 18:00 on X/X/XX. Based on a duration between the deadline of the to-be-processed order and the current time, different degrees of urgency of the to-be-processed orders may be obtained. The first target order represents the to-be-processed order having the deadline less than or equal to the first preset duration from the current time. For example, if the first preset duration is 2 hours, and the duration between the deadline of the to-be-processed order A and the current time is 1 hour, the to-be-processed order A is the first target order. Correspondingly, if the duration between the deadline of the to-be-processed order B and the current time is 3 hours, the to-be-processed order B is the second target order. The degree of urgency of the to-be-processed order B is less than that of the to-be-processed order A. The first target order and the second target order both may correspond to one or more to-be-processed orders.

Further, the first necessary number is determined according to to-be-processed orders corresponding to the first target order. The first necessary number is a sum of warehousing box identifiers calculated after warehousing box identifiers of all to-be-processed orders corresponding to the first target order are merged. It should be noted that, since different to-be-processed orders may include the same warehousing box identifier, the first necessary number may be equal to or less than a sum of warehousing box identifiers in each of the to-be-processed orders. Correspondingly, the second necessary number is determined according to to-be-processed orders corresponding to the second target order. The first necessary number and the second necessary number each represent a total number of warehousing boxes that need to be processed by the workstation within the corresponding duration. In the subsequent step of determining the target workstation number, a corresponding first target workstation number and a corresponding second target workstation number may be determined respectively for the first necessary number and the second necessary number, so as to realize precise control of a moment of enabling/disabling the workstations, and avoid a problem of an insufficient total workstation processing capacity caused by a sudden increase in an order number within a period of time, thereby improving the working stability and working efficiency of the workstations and the warehousing system.

Optionally, in the step in this embodiment, in addition to determining the first target order and the second target order according to the deadline of each of the to-be-processed orders, more target orders such as a third target order and a fourth target order may be further determined, to realize control of a workstation number in a plurality of periods of time, so as to further enhance the precise control of the moment of enabling/disabling the workstations, thereby improving the working stability and working efficiency of the workstations and the warehousing system. Examples are not enumerated herein.

In another possible implementation, the to-be-processed order information includes at least one to-be-processed order and a deadline corresponding to the to-be-processed order, and each to-be-processed order includes at least one warehousing box identifier.

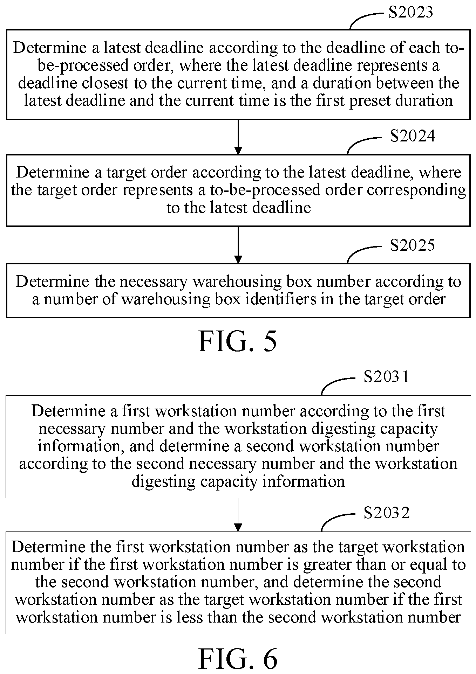

As shown in FIG. 5, a specific implementation of step S202 may include the following steps:
S2023: Determine a latest deadline according to the deadline of each to-be-processed order, where the latest deadline represents a deadline closest to the current time, and a duration between the latest deadline and the current time is the first preset duration.
S2024: Determine a target order according to the latest deadline, where the target order represents a to-be-processed order corresponding to the latest deadline.
S2025: Determine the necessary warehousing box number according to a number of warehousing box identifiers in the target order.

Exemplarily, the latest deadline is the deadline closest to the current time. For example, the deadline of the to-be-processed order A is 1 hour from the current time, the deadline of the to-be-processed order B is 2 hours from the current time, and the deadline of the to-be-processed order C is 4 hours from the current time. Therefore, the deadline of the to-be-processed order A is the deadline. It may be understood that the latest deadline is constantly changing with the passage of time and the continuous processing of orders. For example, after 3 hours, the deadline of the to-be-processed order C is 1 hour from the current time. Since the deadline of the to-be-processed order C is closest to the current time than others of the to-be-processed orders, the deadline of the to-be-processed order C is the latest deadline.

Further, the target order is determined according to the to-be-processed order corresponding to the latest deadline. The target order may correspond to one or more to-be-processed orders. Warehousing box identifiers in all target orders are merged, and then a sum of the warehousing box identifiers is calculated as the necessary warehousing box number. In the subsequent step of determining the target workstation number, the target workstation number is determined according to the necessary warehousing box number, to ensure that the orders within the latest deadline can be processed on time before the deadlines.

In the step of this embodiment, the corresponding target orders within the latest deadline are acquired, and the necessary warehousing box numbers are determined according to the target orders, so that a number of workstations required for each of the to-be-processed orders can be dynamically determined within a time interval of the latest deadline, thereby determining precise recommendation for information of enabling/disabling a workstation. In this way, the working stability and working efficiency of the workstations and warehousing system are improved.

S203: Determine the target workstation number according to the necessary warehousing box number and workstation processing capacity information, where the workstation processing capacity information is used for representing a number of warehousing boxes processed by a single workstation in a unit time.

Step S203 further includes a step of acquiring the workstation processing capacity information, including:
acquiring identification information of the workstation, and acquiring a historical work record of the workstation according to the identification information of the workstation; and determining the workstation processing capacity information according to the historical work record.

For example, the workstation processing capacity information is information that represents a capacity of processing warehousing boxes by a single workstation, which is specifically, for example, 100 boxes per hour per workstation. The identification information of the workstation is determined to retrieve the historical work record of the workstation corresponding to the identification information, such as a total number of processed warehousing boxes of the workstation in each day in the latest week or a total number of processed warehousing boxes of the workstation in each hour in the latest day. Then a number of processed warehousing boxes in a unit time may be calculated to determine the workstation processing capacity information.

In the step of this embodiment, the historical work records of the different workstations are acquired to determine the accurate processing capacity information of the different workstations. Due to factors such as different levels and experience of operators, the different workstations have different processing capacities. Using the historical work records of the workstations can improve the accuracy of evaluation of the processing capacities of the workstations, and improve the accuracy of the workstation processing capacity information, thereby improving the accuracy of the information enabling/disabling the workstation.

Exemplarily, due to the different types of the warehousing boxes processed by the different workstations, respective workstation processing capacity information differs. Therefore, optionally, the workstation processing capacity information includes workstation category information, where the workstation category information is used for representing a category of a warehousing box processed by the workstation. Step S203 further includes: determining warehousing box category information according to the to-be-processed order information, where the warehousing box category information is used for representing a category of a warehousing box corresponding to each to-be-processed order.

Further, The determining the target workstation number according to the necessary warehousing box number and workstation processing capacity information includes: allocating warehousing boxes of the necessary warehousing box number according to the warehousing box category information and the workstation category information, and determining a number of warehousing boxes to be processed by each workstation; and determining a target workstation number of a type of workstations corresponding to the workstation category information according to the number of warehousing boxes to be processed by each workstation and the workstation processing capacity information corresponding to each workstation; and the generated information of enabling/disabling the workstation may indicate that a user should enable or disable the workstations corresponding to the workstation category information in the subsequent process of generating the information of enabling/disabling the workstations according to the target workstation number, thereby realizing precise enabling/disabling recommendations for different types of workstations. In this way, the overall working efficiency of the warehousing system is improved.

In the step of this embodiment, the number of warehousing boxes to be processed by each of the workstations is determined according to the warehousing box category information and the workstation category information, and the target workstation number is determined for each workstation according to the number of warehousing boxes to be processed by each of the workstations and the workstation processing capacity information corresponding to each type of the workstations, so as to further refine enabling/disabling management of different types of workstations, thereby further improving the working stability and working efficiency of the workstations and the warehousing system.

Further, in a possible implementation, the target workstation number includes a first workstation number and a second workstation number. As shown in FIG. 6, A specific implementation of step S203 includes the following steps:
S2031: Determine a first workstation number according to the first necessary number and the workstation processing capacity information, and determine a second workstation number according to the second necessary number and the workstation processing capacity information.
S2032: Determine the first workstation number as the target workstation number if the first workstation number is greater than or equal to the second workstation number, and determine the second workstation number as the target workstation number if the first workstation number is less than the second workstation number.

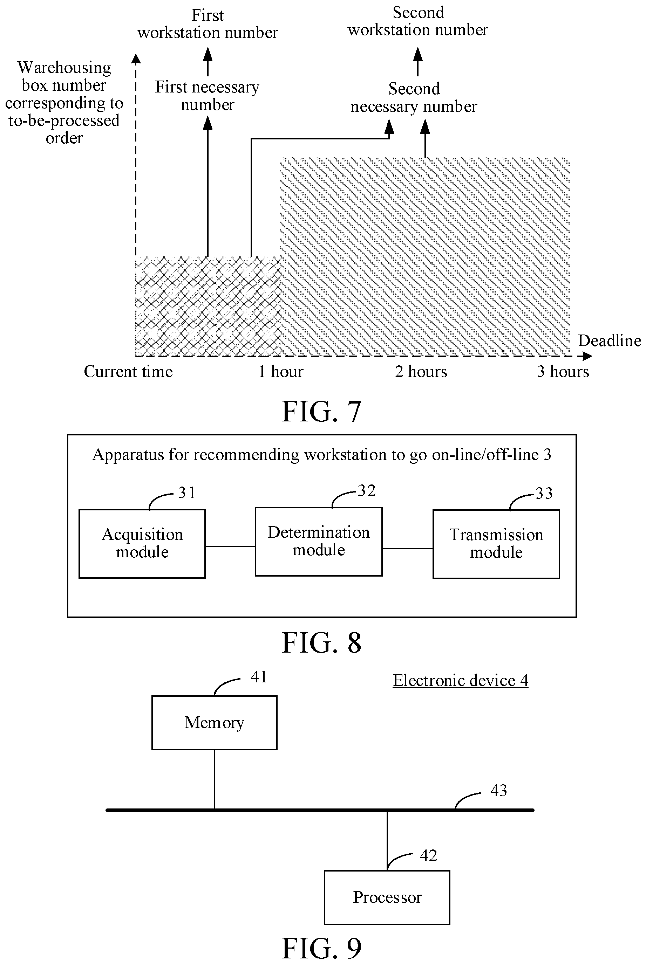

Exemplarily, FIG. 7 is a schematic diagram of determining a target workstation number according to an embodiment of the present disclosure. As the number of the to-be-processed orders in the system changes, a necessary order number in a corresponding duration and a target workstation number in a corresponding duration change. As shown in FIG. 7, the preset time is a time point that is 1 hour from the current time. A warehousing box number corresponding to to-be-processed orders that need to be processed within 1 hour is the first necessary number, and a warehousing box number corresponding to to-be-processed orders that need to be processed within 3 hours is the second necessary number. Correspondingly, a number of workstations required within 1 hour is determined as the first workstation number according to the workstation processing capacity information and the first necessary number, and a number of workstations required within 3 hours is determined as the second workstation number according to the workstation processing capacity information and the second necessary number. If the first workstation number is greater than the second workstation number, it indicates that many warehousing boxes need to be processed within the current 1 hour, and there are fewer orders after 1 hour. In this case, the first workstation number is determined as the target workstation number, to ensure that orders with the deadline within 1 hour can be processed. In addition, since the first workstation number is larger, which means the total workstation processing capacity is larger, the orders within 3 hours can be processed. Therefore, a problem that the number of orders exceeds the total processing capacity is avoided. If the second workstation number is greater than the first workstation number, it indicates that few warehousing boxes need to be processed within the current 1 hour, and there are more orders after 1 hour. In this case, the second workstation number is determined as the target workstation number, to ensure that orders with the deadline within 3 hours can be processed. Since the second workstation number is larger, which means the total workstation processing capacity is larger, the orders within 1 hour can be processed. Through the above solution, an insufficient processing capacity caused by few workstations is avoided in either of the two cases, which ensures that the orders do not expire, thereby improving the stability of the warehousing system.

S204: Generate information of enabling/disabling a workstation according to the target workstation number of a type of workstations corresponding to the workstation category information, and transmit the information of enabling/disabling the workstation to a terminal device, where the information of enabling/disabling the workstation indicates that a user should enable/disable the workstations corresponding to the workstation category information.

In the step of this embodiment, an implementation of step S204 is the same as that of step S 103 in the embodiment shown in FIG 2.

FIG. 8 is a schematic structural diagram of an apparatus for recommending to enable/disable a workstation according to an embodiment of the present disclosure. As shown in FIG. 8, the apparatus 3 for recommending to enable/disable a workstation includes:
an acquisition module 31, configured to acquire to-be-processed order information, where the to-be-processed order information is used for representing the to-be-processed orders in the system and the deadline corresponding to each of the to-be-processed orders, and each of the to-be-processed orders corresponds to at least one warehousing box;
a determination module 32, configured to determine a target workstation number according to the to-be-processed order information, where the target workstation number is used for representing a number of workstations required for completing the corresponding to-be-processed order before the deadline; and
a transmission module 33, configured to generate information of enabling/disabling a workstation according to the target workstation number, and transmit the information of enabling/disabling the workstation to a terminal device.

Optionally, the determination module 32 is specifically configured to: determine a necessary warehousing box number according to-be-processed order information, where the necessary warehousing box number is used for representing a number of warehousing boxes that need to be processed within a first preset duration; and determine the target workstation number according to the necessary warehousing box number and workstation processing capacity information, where the workstation processing capacity information is used for representing a number of warehousing boxes processed by a single workstation in a unit time.

Optionally, the acquisition module 31 is further configured to: acquire identification information of the workstation; acquire a historical work record of the workstation according to the identification information of the workstation; and determine the workstation processing capacity information according to the historical work record.

Optionally, the to-be-processed order information includes at least two to-be-processed orders and deadlines corresponding to the to-be-processed orders, each of the to-be-processed orders includes at least one warehousing box identifier, the necessary warehousing box number includes a first necessary number and a second necessary number, the first necessary number is used for representing the number of warehousing boxes that need to be processed within the first preset duration, the second necessary number is used for representing a number of warehousing boxes that need to be processed within a second preset duration, and during the determination of the necessary warehousing box number according to the to-be-processed order information, the determination module 32 is specifically configured to: determine a first target order and a second target order according to the deadline of each of the to-be-processed orders, where the first target order represents a to-be-processed order, where a duration from a deadline of the to-be-processed order to a current time is less than or equal to the first preset duration, the second target order represents a to-be-processed order, where a duration from a deadline of the to-be-processed order to the current time is less than or equal to the second preset duration, and the second preset duration is greater than the first preset duration; and determine the first necessary number according to a number of warehousing box identifiers in the first target order, and determine the second necessary number according to a number of warehousing box identifiers in the second target order; and during the determination of the target workstation number according to the necessary warehousing box number and workstation processing capacity information, the determination module 32 is specifically configured to: determine a first workstation number according to the first necessary number and the workstation processing capacity information; determine a second workstation number according to the second necessary number and the workstation processing capacity information; and determine the first workstation number as the target workstation number if the first workstation number is greater than or equal to the second workstation number, and determine the second workstation number as the target workstation number if the first workstation number is less than the second workstation number

Optionally, the to-be-processed order information includes at least one to-be-processed order and a deadline corresponding to the to-be-processed order, each to-be-processed order includes at least one warehousing box identifier, and during the determination of the necessary warehousing box number according to-be-processed order information, the determination module 32 is specifically configured to: determine a latest deadline according to the deadline of each to-be-processed order, where the latest deadline represents a deadline closest to the current time, and a duration between the latest deadline and the current time is the first preset duration; determine a target order according to the latest deadline, where the target order represents a to-be-processed order corresponding to the latest deadline; and determine the necessary warehousing box number according to a number of warehousing box identifiers in the target order.

Optionally, the workstation processing capacity information includes workstation category information, where the workstation category information is used for representing a category of a warehousing box processed by the workstation, and the determination module 32 is further configured to: determine warehousing box category information according to the to-be-processed order information, where the warehousing box category information is used for representing a category of a warehousing box corresponding to each to-be-processed order; during the determination of the target workstation number according to the necessary warehousing box number and workstation processing capacity information, the determination module 32 is specifically configured to: allocate warehousing boxes of the necessary warehousing box number according to the warehousing box category information and the workstation category information, and determine a number of warehousing boxes to be processed by each workstation; and determine a target workstation number of a type of workstations corresponding to the workstation category information according to the number of warehousing boxes to be processed by each workstation and the workstation processing capacity information corresponding to each workstation; and during the generation of the workstation to go on-line/off-line information according to the target workstation number, the transmission module 33 is specifically configured to generate the information of of enabling/disabling a workstation according to the target workstation number of a type of workstations corresponding to the workstation category information, where the information of enabling/disabling the workstation indicates that a user should enable or disable the workstations corresponding to the workstation category information.

Optionally, the terminal device is a workstation, the information of enabling/disabling a workstation includes information of enabling a workstation and information of disabling a workstation, and during the generation of the information of enabling/disabling a workstation according to the target workstation number, the transmission module 33 is specifically configured to: generate the information of enabling the workstation if the target workstation number is greater than a current workstation number, where the information of enabling the workstation indicates that the user should enable the workstations; and generate the information of disabling a workstation if the target workstation number is less than the current workstation number, where the information of disabling the workstation indicates that the user should disable the workstations; and during the transmission of the workstation to the information of enabling/disabling the workstation to the terminal device, the transmission module is specifically configured to transmit the information of enabling the workstation or the information of disabling the workstation to the workstations for display.

FIG. 9 is a schematic diagram of an electronic device according to an embodiment of the present disclosure. As shown in FIG. 9, the electronic device 4 provided in this embodiment includes a memory 41, a processor 42, and a computer program.

The computer program is stored in the memory 41, and is configured to be executed by the processor 42 to implement the method for recommending to enable/disable a workstation provided in any of the embodiments corresponding to FIG. 2 to FIG. 6 of the present disclosure.

The memory 41 and the processor 42 are connected through a bus 43.

For relevant descriptions, correspondingly refer to the relevant descriptions and effects corresponding to the steps in FIG. 2 to FIG. 7. Details are not repeated herein.

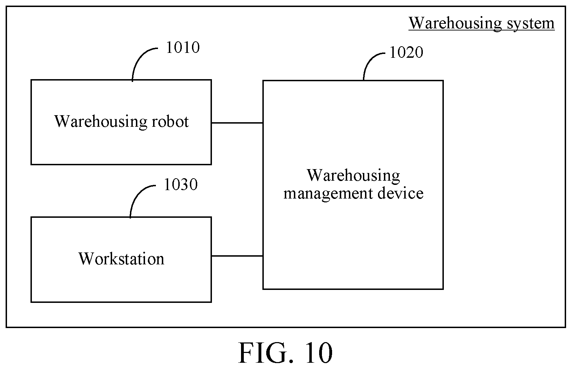

FIG. 10 is a schematic structural diagram of a warehousing system according to an embodiment of the present disclosure. As shown in FIG. 10, the warehousing system includes a warehousing robot 1010, a warehouse management device 1020, and a workstation 1030.

The warehouse management device 1020 is configured to control the warehousing robot 1010 to carry a warehousing box to the workstation 1030 and transmit the method for recommending to of enable/disable a workstation to the workstation 1030. The warehouse management device 1020 is the electronic device 4 in the embodiment shown in FIG. 8.

An embodiment of the present disclosure provides a computer-readable storage medium, storing a computer program therein. When the computer program is executed by a processor, the method for recommending to enable/disable a workstation provided in any of the embodiments corresponding to FIG. 2 to FIG. 7 of the present disclosure is implemented.

The computer-readable storage medium may be a read-only memory (ROM), a random access memory (RAM), a CD-ROM, a magnetic tape, a floppy disk, an optical data storage device, or the like.

An embodiment of the present disclosure provides a computer product, including a computer program. When the computer program is executed by a processor, the method for recommending to enable/disable a workstation provided in any of the embodiments corresponding to FIG. 2 to FIG. 7 of the present disclosure is implemented.

It should be understood that the disclosed device and method in the embodiments provided in the present disclosure may be implemented in other manners. For example, the device embodiments described above are merely exemplary. For example, module division is merely logical function division and may be other division in actual implementation. For example, a plurality of modules may be combined or integrated into another system, or some features may be ignored or not executed. In addition, the displayed or discussed mutual couplings or direct couplings or communicative connections may be implemented through some interfaces. The indirect couplings or communicative connections between the apparatuses or modules may be electrical, mechanical, or in other forms.

The modules described as separate parts may or may not be physically separate, and components displayed as modules may or may not be physical units, that is, may be located in one position, or may be distributed on a plurality of network units. Some or all of the modules may be selected according to actual needs to achieve the objectives of the solutions of the embodiments.

In addition, functional modules in the embodiments of the present disclosure may be integrated into one processing module, or each of the modules may be physically separated, or two or more modules may be integrated into one unit. The integrated unit of the above modules may be implemented in a form of hardware, or may be implemented in a form of hardware and software functional units.

The above integrated modules implemented in the form of software functional modules may be stored in a computer-readable storage medium. The above software functional module is stored in a storage medium, including a plurality of instructions to enable a computer device (which may be a personal computer, a server, a network device, or the like) or a processor to perform some steps of the methods in the embodiments of the present disclosure.

It should be understood that the above processor may be a central processing unit (CPU for short), other general purpose processors, a digital signal processor (DSP for short), an application specific integrated circuit (ASIC for short), or the like. The general-purpose processor may be a microprocessor, or the processor may be any conventional processor or the like. The steps of the method disclosed in combination with the invention may be directly implemented by a hardware processor or by a combination of hardware and software modules in the processor.

The memory may include a high-speed RAM memory, and may further include a non-volatile storage NVM, such as at least one disk memory, a USB flash disk, a removable hard disk, a ROM, a magnetic disk, or an optical disk.

The bus may be an industry standard architecture (ISA) bus, a peripheral component (PCI) bus, an extended industry standard architecture (EISA) bus, or the like. The bus may be divided into an address bus, a data bus, a control bus, and the like. For ease of representation, the bus in the drawings of the present disclosure is not limited to only one bus or one type of bus.

The above storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a ROM, a magnetic memory, a flash memory, and a magnetic disk or an optical disk. The storage medium may be any available medium accessible to a general-purpose or dedicated computer.

An exemplary storage medium is coupled to a processor, so that the processor can read information from the storage medium or write information into the storage medium. Certainly, the storage medium may be a component of the processor. The processor and the storage medium may be located in the ASIC. Certainly, the processor and the storage medium may be used in an electronic device or a master control device as discrete components.

A person of ordinary skill in the art may understand that all or some of the steps of the method embodiments may be implemented by a program instructing relevant hardware. The program may be stored in a computer-readable storage medium. When the program is executed, steps of the above method embodiments are performed. The storage medium includes a medium such as a ROM, a RAM, a magnetic disk, or an optical disc that can store program code.

Finally, it should be noted that: the above embodiments are merely used for describing the technical solutions of the present disclosure, and are not intended to limit the present disclosure. Although the present disclosure is described in detail with reference to the above embodiments, a person of ordinary skill in the art should understand that they can still make modifications to the technical solutions recited in the above embodiments or make equivalent replacements to a part or all of the technical features thereof; and these modifications or replacements will not cause the essence of corresponding technical solutions to depart from the scope of the technical solutions in the embodiments of the present disclosure.

The above descriptions are merely a specific implementation of the present disclosure, and are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for recommending to enable/disable a workstation, the method comprising:
acquiring to-be-processed order information, wherein the to-be-processed order information is used for representing to-be-processed orders in a system and a deadline corresponding to each of the to-be-processed orders, and each of the to-be-processed orders corresponds to at least one warehousing box;
determining a target workstation number according to the to-be-processed order information, wherein the target workstation number is used for representing a number of workstations required for completing the corresponding to-be-processed orders before the deadline; and
generating information of enabling/disabling a workstation according to the target workstation number, and transmitting the information of enabling/disabling the workstation to a terminal device.

2. The method according to claim 1, wherein the determining a target workstation number according to the to-be-processed order information comprises:
determining a necessary warehousing box number according to the to-be-processed order information, wherein the necessary warehousing box number is used for representing a number of warehousing boxes that need to be processed within a first preset duration; and
determining the target workstation number according to the necessary warehousing box number and workstation processing capacity information, wherein the workstation processing capacity information is used for representing a number of warehousing boxes processed by a single workstation in a unit time.

3. The method according to claim 2, further comprising:
acquiring identification information of the workstation;
acquiring a historical work record of the workstation according to the identification information of the workstation; and
determining the workstation processing capacity information according to the historical work record.

4. The method according to claim 2 or 3, wherein the to-be-processed order information comprises at least two to-be-processed orders and deadlines corresponding to the to-be-processed orders, each of the to-be-processed orders comprises at least one warehousing box identifier, the necessary warehousing box number comprises a first necessary number and a second necessary number, the first necessary number is used for representing a number of warehousing boxes that need to be processed within a first preset duration, and the second necessary number is used for representing a number of warehousing boxes that need to be processed within a second preset duration; and
the determining a necessary warehousing box number according to the to-be-processed order information comprises:
determining a first target order and a second target order according to the deadline of each of the to-be-processed orders, wherein the first target order represents a to-be-processed order where a duration from a deadline of the to-be-processed order to a current time is less than or equal to the first preset duration, the second target order represents a to-be-processed order where a duration from a deadline of the to-be-processed order to the current time is less than or equal to the second preset duration, and the second preset duration is greater than the first preset duration; and
determining the first necessary number according to a number of warehousing box identifiers in the first target order, and determining the second necessary number according to a number of warehousing box identifiers in the second target order; and
the determining the target workstation number according to the necessary warehousing box number and workstation processing capacity information comprises:
determining a first workstation number according to the first necessary number and the workstation processing capacity information;
determining a second workstation number according to the second necessary number and the workstation processing capacity information; and
determining the first workstation number as the target workstation number if the first workstation number is greater than or equal to the second workstation number, and determining the second workstation number as the target workstation number if the first workstation number is less than the second workstation number.

5. The method according to any of claims 2 to 4, wherein the to-be-processed order information comprises at least one to-be-processed order and a deadline corresponding to the to-be-processed order, each to-be-processed order comprises at least one warehousing box identifier, and the determining a necessary warehousing box number according to the to-be-processed order information comprises:
determining a latest deadline according to the deadline of each to-be-processed order, wherein the latest deadline represents a deadline closest to the current time, and a duration between the latest deadline and the current time is the first preset duration;
determining a target order according to the latest deadline, wherein the target order represents a to-be-processed order corresponding to the latest deadline; and
determining the necessary warehousing box number according to a number of warehousing box identifiers in the target order.

6. The method according to any of claims 2 to 5, wherein the workstation processing capacity information comprises workstation category information, the workstation category information is used for representing a category of a warehousing box processed by the workstation, and the method further comprises:
determining warehousing box category information according to the to-be-processed order information, wherein the warehousing box category information is used for representing a category of a warehousing box corresponding to each to-be-processed order;
the determining the target workstation number according to the necessary warehousing box number and workstation processing capacity information comprises:
allocating warehousing boxes of the necessary warehousing box number according to the warehousing box category information and the workstation category information, and determining a number of warehousing boxes to be processed by each workstation; and
determining a target workstation number of a type of workstations corresponding to the workstation category information according to the number of warehousing boxes to be processed by each workstation and the workstation processing capacity information corresponding to each workstation; and
the generating information of enabling/disabling a workstation according to the target workstation number comprises:
generating the information of enabling/disabling the workstation according to the target workstation number of a type of workstations corresponding to the workstation category information, wherein the information of enabling/disabling the workstation indicates that a user enables or disables the workstations corresponding to the workstation category information.

7. The method according to any of claims 1 to 6, wherein the terminal device is a workstation, the information of enabling/disabling the workstation comprises information of enabling a workstation and information of disabling a workstation, and the generating the information of enabling/disabling the workstation according to the target workstation number comprises:
generating the information of enabling the workstation if the target workstation number is greater than a current workstation number, wherein the information of enabling the workstation indicates that the user enables the workstations; and
generating the information of disabling the workstation if the target workstation number is less than the current workstation number, wherein the information of disabling the workstation indicates that the user disables the workstations; and
the transmitting the information of enabling/disabling a workstation to a terminal device comprises:
transmitting the information of enabling the workstation or the information of disabling the workstation to the workstations for display.

8. An apparatus for recommending to enable/disable a workstation, the apparatus comprising:
an acquisition module, configured to acquire to-be-processed order information, wherein the to-be-processed order information is used for representing to-be-processed orders in a system and a deadline corresponding to each of the to-be-processed orders, and each of the to-be-processed orders corresponds to at least one warehousing box;
a determination module, configured to determine a target workstation number according to the to-be-processed order information, wherein the target workstation number is used for representing a number of workstations required for completing the corresponding to-be-processed order before the deadline; and
a transmission module, configured to generate information of enabling/disabling a workstation according to the target workstation number, and transmit the information of enabling/disabling the workstation to a terminal device.

9. The apparatus according to claim 8, wherein the determination module is specifically configured to:
determine a necessary warehousing box number according to the to-be-processed order information, wherein the necessary warehousing box number is used for representing a number of warehousing boxes that need to be processed within a first preset duration; and
determine the target workstation number according to the necessary warehousing box number and workstation processing capacity information, wherein the workstation processing capacity information is used for representing a number of warehousing boxes processed by a single workstation in a unit time.

10. The apparatus according to claim 9, wherein the acquisition module is further configured to:
acquire identification information of the workstation; acquire a historical work record of the workstation according to the identification information of the workstation; and
determine the workstation processing capacity information according to the historical work record.

11. The apparatus according to claim 9 or 10, wherein the to-be-processed order information comprises at least two to-be-processed orders and deadlines corresponding to the to-be-processed orders, each of the to-be-processed orders comprises at least one warehousing box identifier, the necessary warehousing box number comprises a first necessary number and a second necessary number, the first necessary number is used for representing a number of warehousing boxes that need to be processed within a first preset duration, the second necessary number is used for representing a number of warehousing boxes that need to be processed within a second preset duration, and during the determination of the necessary warehousing box number according to the to-be-processed order information, the determination module is specifically configured to:
determine a first target order and a second target order according to the deadline of each of the to-be-processed orders, wherein the first target order represents a to-be-processed order where a duration from a deadline of the to-be-processed order to a current time is less than or equal to the first preset duration, the second target order represents a to-be-processed order where a duration from a deadline of the to-be-processed order to the current time is less than or equal to the second preset duration, and the second preset duration is greater than the first preset duration; and
determine the first necessary number according to a number of warehousing box identifiers in the first target order, and determine the second necessary number according to a number of warehousing box identifiers in the second target order; and
during the determination of the target workstation number according to the necessary warehousing box number and workstation processing capacity information, the determination module is specifically configured to:
determine a first workstation number according to the first necessary number and the workstation processing capacity information;
determine a second workstation number according to the second necessary number and the workstation processing capacity information; and
determine the first workstation number as the target workstation number if the first workstation number is greater than or equal to the second workstation number, and determine the second workstation number as the target workstation number if the first workstation number is less than the second workstation number

12. The apparatus according to any of claims 9 to 11, wherein the to-be-processed order information comprises at least one to-be-processed order and a deadline corresponding to the to-be-processed order, each to-be-processed order comprises at least one warehousing box identifier, and during the determination of the necessary warehousing box number according to the to-be-processed order information, the determination module is specifically configured to:
determine a latest deadline according to the deadline of each to-be-processed order, wherein the latest deadline represents a deadline closest to the current time, and a duration between the latest deadline and the current time is the first preset duration;
determine a target order according to the latest deadline, wherein the target order represents a to-be-processed order corresponding to the latest deadline; and
determine the necessary warehousing box number according to a number of warehousing box identifiers in the target order.

13. The apparatus according to any of claims 9 to 12, wherein the workstation processing capacity information comprises workstation category information, wherein the workstation category information is used for representing a category of a warehousing box processed by the workstation, and the determination module is further configured to:
determine warehousing box category information according to the to-be-processed order information, wherein the warehousing box category information is used for representing a category of a warehousing box corresponding to each to-be-processed order;
during the determination of the target workstation number according to the necessary warehousing box number and workstation processing capacity information, the determination module is specifically configured to:
allocate warehousing boxes of the necessary warehousing box number according to the warehousing box category information and the workstation category information, and determine a number of warehousing boxes to be processed by each workstation; and
determine a target workstation number of a type of workstations corresponding to the workstation category information according to the number of warehousing boxes to be processed by each workstation and the workstation processing capacity information corresponding to each workstation; and
during the generation of the workstation to go on-line/off-line information according to the target workstation number, the transmission module is specifically configured to:
generate the information of enabling/disabling a workstation according to the target workstation number of a type of workstations corresponding to the workstation category information, wherein the information of enabling/disabling the workstation indicates that a user enables or disables the workstations corresponding to the workstation category information.

14. The apparatus according to any of claims 8 to 13, wherein the terminal device is a workstation, the information of enabling/disabling the workstation comprises information of enabling a workstation and information of disabling a workstation, and during the generation of the information of enabling/disabling the workstation according to the target workstation number, the transmission module is specifically configured to:
generate the information of enabling the workstation if the target workstation number is greater than a current workstation number, wherein the information of enabling the workstation indicates that the user enables the workstations; and
generate the information of disabling the workstation if the target workstation number is less than the current workstation number, wherein the information of disabling the workstation indicates that the user disables the workstations; and
during the transmission of the information of enabling/disabling a workstation to the terminal device, the transmission module is specifically configured to:
transmit the information of enabling the workstation or the information of disabling the workstation to the workstations for display.

15. An electronic device, comprising a processor and a memory, wherein
the memory is configured to store program code; and
the processor is configured to invoke the program code stored in the memory to perform the method for recommending to enable/disable a workstation according to any of claims 1 to 7.

16. A warehousing system, comprising: a workstation and the electronic device according to claim 15, wherein the workstation is communicatively connected to the electronic device.

17. A computer-readable storage medium, storing computer-executable instructions therein, wherein when a processor executes the computer-executable instructions, the method for recommending to enable/disable a workstation according to any of claims 1 to 7 is implemented.

18. A computer program product, comprising program code, wherein when a computer executes the computer program, the program code performs the method for recommending to enable/disable a workstation according to any of claims 1 to 7.
